# EUROPÄISCHE PATENTANMELDUNG

(11) **EP 3 170 386 A1**
(43) Veröffentlichungstag der Anmeldung: **24.05.2017**
(21) Anmeldenummer: 16002411.3
(22) Anmeldetag: 14.11.2016
(51) Int. Cl.: A01K 15/02

(54) **PFERDEFÜHRUNGSANLAGE**

(30) Priorität: 20.11.2015 DE 102015015054
(71) Anmelder: Häring, Theo, 79802 Dettighofen (DE)
(72) Erfinder: Häring, Theo, 79802 Dettighofen (DE)

(57) **Zusammenfassung**

Eine Führungsanlage zum reiterlosen Trainieren von Pferden und anderen Tieren mit einer Anzahl auf einer Trainingsbahn umlaufenden Führungsgittern, welche sich in einem Abstand voneinander befinden, laufen mittels Fahrgestellen (4) an der Fahrschiene (2) hängend entlang. Die Fahrschiene (2) besteht aus einem einzigen Metallprofil. Die gesamte Konstruktion wird dadurch bedeutend leichter und einfacher. Zudem sind nun Fahrgestelle (4) möglich, die einfacher und leichter in der Konstruktion sind. Eine solche Führungsanlage ist sehr einfach im Aufbau und benötigt wenig Energie im Betrieb.

## Beschreibung

Die Erfindung betrifft eine Führungsanlage zum reiterlosen Trainieren von Pferden und anderen Tieren nach dem Oberbegriff des unabhängigen Patentanspruches.

Auf dem Markt sind Freilaufführungsanlagen zum Trainieren von Pferden erhältlich, welche auf offenem Feld oder in einer Art Halle, überdacht, montiert werden. Sie bestehen aus einer kreisförmigen Longierbahn, welche auch als Hufschlag bezeichnet wird. Statt an einer Longe vom Mensch geführt, werden Pferde durch eine Vorrichtung auf dieser Longierbahn geführt. Diese Vorrichtung besteht, wie ein Karussell, aus einem Drehstern, welcher radial von einem Drehzentrum nach aussen ragende Tragarme aufweist. An jedem Tragarm hängt an seinem radial äusseren Bereich ein Führungsgitter nach unten. Jedes Führungsgitter besteht aus einem Rahmen, welcher mit einem Metallgitter bespannt ist. Die Pferde müssen in einem Pferdeführungsbereich zwischen je zwei benachbarten Führungsgittern auf der Longierbahn nach gegebener Geschwindigkeit rundum laufen. Die Longierbahn ist so breit, dass die Pferde sich umdrehen können, wenn die Drehrichtung der Vorrichtung gewechselt wird. Die Führungsgitter können elektrisch geladen werden, damit die Pferde nicht in Versuchung kommen, die ganze Anlage durch Körpereinsatz abzubremsen. Die Führungsgitter dieser Anlagen weisen ein grosses Gewicht auf. Eine derartige Freilaufführungsanlage ist beispielsweise aus DE 28 52 777 A1 bekannt.

DE 197 46 562 zeigt eine andere Ausführung einer Freilaufführungsanlage zum Trainieren von Pferden mit einer kreisförmigen Longierbahn. Diese ist innenseitig und aussenseitig mit je einem Zaun oder einer Wand begrenzt und mit einer Konstruktion mit Trägern zum Tragen eines Daches überdacht. Im Bereich der Longierbahn ist an einem Träger eine Tragkonstruktion herabhängend angeordnet. Am unteren Ende der Tragkonstruktion ist beidseitig je ein Stützrad angebracht. Die Stützräder stehen im Winkel zueinander und greifen von schräg unten an einem umlaufenden Profilring an. Die Stützräder führen und tragen den umlaufenden Profilring. Ein Antriebsmotor wirkt über ein Antriebsrad auf den Profilring und treibt diesen an. Am Profilring sind in regelmässigen Abständen bekannte Führungsgitter hängend angebracht. Jedes Führungsgitter besteht aus einem Rahmen, welcher mit einem Metallgitter bespannt ist. Dieses System weist erhebliche dynamische Probleme auf, welche durch die Grösse und die Masse der Führungsgitter entstehen. Diese äussern sich im Erzeugen von Lärm, Erschütterungen und unregelmässigem Lauf der Freilaufführungsanlage.

Der grosse Nachteil aller dieser Anlagen besteht darin, dass nur kreisförmige Trainingsbahnen damit ausgerüstet werden können. Sie benötigen eine flächenmässig der Trainingsbahn entsprechende Ueberdachung mit kreisrundem oder mindestens vieleckigem Grundriss. Zusätzlich ist der Durchmesser einer solchen Trainingsstrecke beschränkt, da die massive Konstruktion sonst sehr schwer wird. Die Gefahr von Spannungsrissen in den Bauteilen wird bei einer grossen Anlage erheblich, denn die nicht vermeidbaren Vibrationen wirken sich verstärkt in der Materialbelastung aus.

Eine andere Art von Führungsanlage mit beliebiger Form der Trainingsbahn ist aus DE 103 29 891 bekannt. Oberhalb der Trainingsbahn ist eine Fahrschiene angeordnet. An dieser Fahrschiene fährt ein Führungsgitterzug wie eine Hängebahn. Er besteht aus einem Antriebswagen und einer Anzahl mit ihm gekuppelter Laufwagen mit je einem unten hängenden Führungsgitter. Der ganze Führungsgitterzug fährt der Fahrschiene entlang hängend die Trainingsbahn ab.

Aus DE 10 2008 031 844 ist eine Führungsanlage bekannt, bei der die Trainingsbahn längere gerade Trainingsabschnitte aufweist. Eine Fahrschiene ist über der Trainingsbahn aufgehängt. Die Fahrschiene besteht aus zwei im Abstand übereinander angeordneten Metallprofilen, welche in Abständen miteinander durch einen Abstandshalter verbunden sind. Das eine der Metallprofile ist eine Führungsschiene und das andere eine Tragschiene. An dieser Fahrschiene fahren Fahrgestelle, welche mit einem Schubstangengliederband untereinander verbunden sind. Uebliche Führungsgitter sind an diesen aufgehängt. Der Antrieb erfolgt mittel Reibungskupplung auf die Schubstangen des Schubstangengliederbandes.

### Aufgabenstellung

Aufgabe der Erfindung ist es, eine Pferdeführanlage anzugeben mit einer ovalen Trainingsbahn, welche auch längere gerade Trainingsabschnitten aufweist. Sie soll einfache Führungsschienen bei genügender Stabilität der Anlage im Betrieb aufweisen bei möglichst geringem Eigengewicht.

Diese Aufgabe wird durch die Erfindung gemäss unabhängigem Patentanspruch gelöst.

Die Erfindung wird nachstehend im Zusammenhang mit den Zeichnungen beschrieben.

Es zeigen:
Fig. 1, eine Pferdeführungsanlage gemäss Stand der Technik mit einem Trainingsparcours mit zwei längeren geraden Trainingsabschnitten;
Fig. 2 und 2a, Zusammenhang von Schubstangen, Fahrgestellen und Fahrschiene nach Stand der Technik in Seitenansicht und Vorderansicht
Fig. 3, Anordnung der neuen Fahrschiene und des Fahrgestelles in Seitenansicht
Fig. 4, Anordnung der neuen Fahrschiene und des Fahrgestelles in Ansicht von vorne.

Die Erfindung wird im folgenden im Zusammenhang mit den Figuren beschrieben.

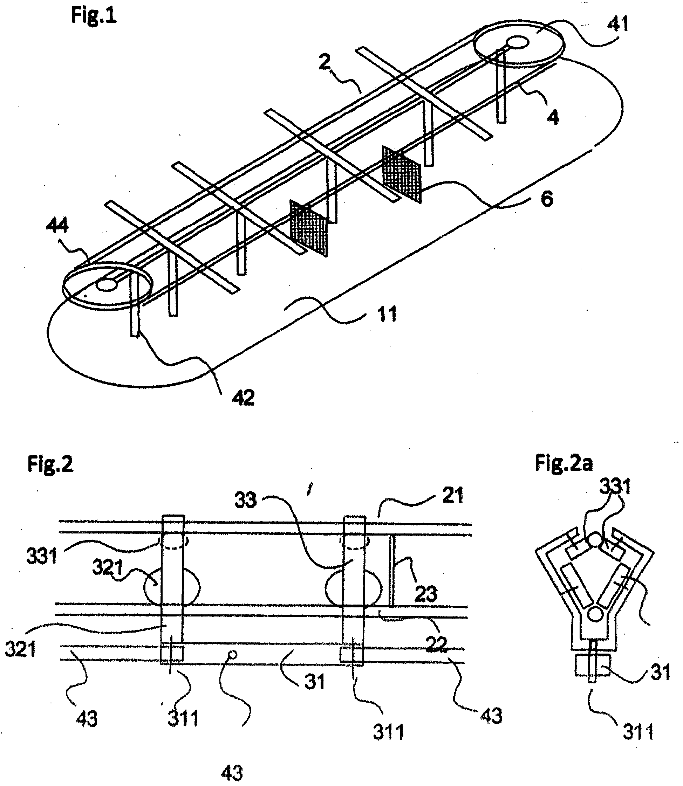

Aus der Figur 1 ist der prinzipielle Aufbau einer Führungsanlage nach Stand der Technik ersichtlich. Auf Tragsäulen ist eine Tragkonstruktion angebracht. Eine Führungsanlage weist eine Trainingsbahn 11 mit längeren geraden Trainingsabschnitten auf. Eine Fahrschiene 2 ist über der Trainingsbahn 11 aufgehängt. Die Fahrschiene 2 besteht aus zwei im Abstand übereinander angeordneten Metallprofilen, welche in Abständen miteinander durch einen Abstandshalter verbunden sind. Das eine der Metallprofile ist eine Führungsschiene und das andere eine Tragschiene. An dieser Fahrschiene fahren Fahrgestelle 4, welche mit einem Schubstangengliederband 3 untereinander verbunden sind. Die Führungsgitter 6 sind an diesen aufgehängt. Der Antrieb erfolgt mittels Reibungskupplung auf die Schubstangen des Schubstangengliederbandes 3.

In den Figuren 2 und 2a ist die Fahrschiene 2 im Zusammenhang mit dem Schubgliederband 3 und den Fahrgestellen 4 nach Stand der Technik dargestellt. Die Fahrschiene 2 besteht aus einer Führungsschiene 21, welche im Abstand senkrecht oberhalb oder auch unterhalb einer Tragschiene 22 angeordnet ist. Führungsschiene 21 und Tragschiene 22 sind durch in regelmässigen oder unregelmässigen Abständen angebrachten Abstandshaltern 23 miteinander verbunden. Für die Tragschiene eignen sich verschiedene Metallprofile, wie Winkelprofile , T-Profile oder solche mit rundem Querschnitt. Fahrgestelle laufen auf/an der Fahrschiene 2 hängend entlang der Trainingsbahn. Das Schubgliederband 3 besteht aus kurzen Schubstangen 31 und langen Schubstangen 43. Alle Schubstangen 31, 43 sind untereinander gelenkig verbunden.

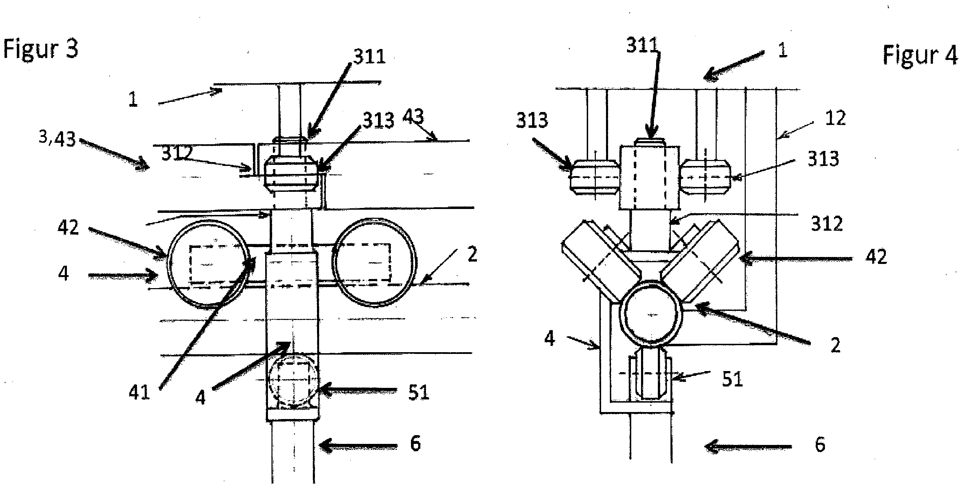

Die neue Führungsanlage gemäss der Erfindung wird im Zusammenhang mit den Figuren 1, 3 und 4 beschrieben. Sie umfasst eine Anzahl auf einer Trainingsbahn umlaufende Führungsgitter 6, welche in einem Abstand voneinander angeordnet sind. Eine Fahrschiene 2 ist an einer Tragkonstruktion 1 befestigt. Die Fahrgestelle 2 sind untereinander gekoppelt mit einem Schubstangengliederband 3. Eine Antriebsvorrichtung nach Stand der Technik treibt mittels Reibungskupplung das Schubstangengliederband 3 an. Das Schubstangengliederband 3 besteht aus einzelnen, miteinander mittels Gelenkkupplungen gekoppelten Schubstangen 43. Die Gelenkkupplungen sind an den Fahrgestellen angeordnet und treiben so die Fahrgestelle 4 an. Diese fahren somit entlang der Fahrschiene 2. Je ein Führungsgitter 6 ist an je einem Fahrgestell 4 hängend befestigt. Die Fahrschiene 2 besteht aus einem einzigen Metallprofil, vorzugsweise aus einem Rohr. Das Schubstangengliederband 3 verläuft unterhalb oder oberhalb der Fahrschiene 2.

Jedes Fahrgestell 4 ist mit einem Drehgestell 41 versehen, an welchem mindestens zwei Tragräder 42 in Laufrichtung hintereinander angeordnet sind. Sie tragen und führen das Fahrgestell.

In einer anderen Version stehen die Tragräder 42 einander gegenüber und in einem Winkel zueinander. Sie rollen sich auf der Tragschiene 2 ab, wobei sie das Fahrgestelle 4 gleichzeitig tragen und führen.

Für besseren Lauf weist das Fahrgestell 4 am Drehgestell 41 je zwei Paar Tragräder 42 im Abstand voneinander auf, wobei jeweils 2 einander gegenüberliegende Tragräder 42 in einem Winkel zueinander stehen.

Jedes Fahrgestell 4 ist mit einer Abhebesicherung 5, 51 versehen. Diese verhindert ein Abheben des Fahrgestells 4 von der Fahrschiene 2. Die Abhebesicherung 5 umfasst eine Rolle 51, welche von unten an der Tragschiene anliegt und abrollt.

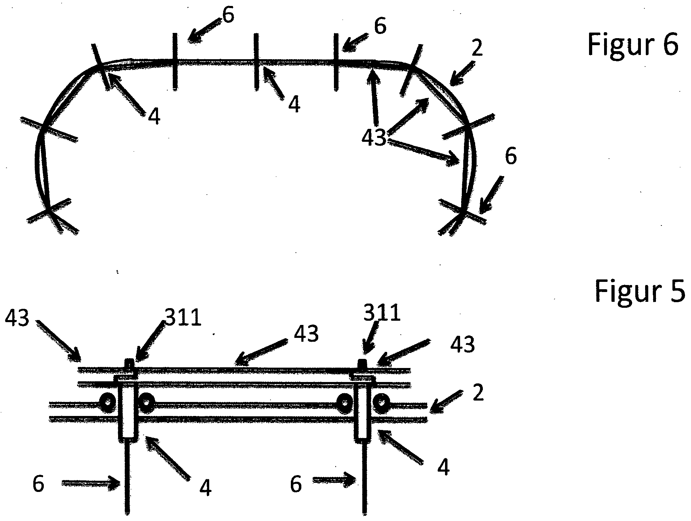

Je zwei benachbarte Schubstangen 43 des Schubstangengliederbandes sind mittels eines Gelenkbolzens 311 oben oder unten am Fahrgestell 2 befestigt. Sie übertragen die Stoss- und Zugkräfte des angetriebenen Schubgliederbandes auf die Fahrgestelle 4. Gleichzeitig funktionieren sie als Gelenkverbindung der jeweils benachbarten Schubstangen, welche dadurch gegeneinander seitlich schwenkbar um die senkrechte Achse des Gelenkbolzens 311 sind. Die Schubstangen 43 sind in sich selbst torrosionsfest ausgeführt und haben an jedem Ende fest, genau fluchtende Lagerstelle zur Aufnahme des Gelenkbolzens 311 und zur Befestigung am Fahrgestell 4. Die so ineinander greifenden Schubstangen 43 halten die Fahrgestelle 4 in stabiler Position senkrecht. Dies ist aus den Figuren 5 und 6 vereinfacht dargestellt ersichtlich.

Damit die Fahrgestelle nicht ins Pendeln kommen können, ist an der Tragkonstruktion 1 im Bereich der Aufhängung der Fahrschiene 2 eine Stabilisatorvorrichtung vorhanden. Diese umfasst zwei Führungsrollen 313, welche beidseitig an den Schubstangen anliegend abrollen. Diese Stabilisatorvorrichtung verhindert jedes seitliche Kippen und Pendeln der Fahrgestelle 4 auch während dem Betrieb. Dies ist besonders wichtig beim Lauf in einer Kurve der Führungsanlage, denn da bewirken die Kräfte des angetriebenen Schubstangengliederbandes ein Moment in Richtung Kurvenaussenseite. Bei einer Ovalanlage sind immer mehrere Fahrgestelle 4 und Schubstangen 43 auf einer geraden Strecke der Umlaufbahn. In der Kurve stehen die Schubstangen 43 jeweils in einem Winkel zueinander ausgeschwenkt und werden so durch die Schubstangen 43 der Fahrgestelle 4 auf den geraden Teilstrecken senkrecht, respektive die Fahrgestelle 4 waagrecht gehalten.

Ein Vorteil der Führungsanlage gemäss der neuen Erfindung ergibt sich durch die viel einfachere Ausführung der Tragschiene 2 mit nur einem Metallprofil. Die gesamte Konstruktion wird dadurch bedeutend leichter und einfacher. Zudem sind nun Fahrgestelle 4 möglich, die einfacher im Aufbau und leichter in der Konstruktion sind. Eine solche Führungsanlage wird einfacher im Aufbau und benötigt weniger Energie im Betrieb, als eine Anlage nach dem bisherigen Stand der Technik.

## Patentansprüche

1. Führungsanlage zum reiterlosen Trainieren von Pferden und anderen Tieren mit einer Anzahl auf einer Trainingsbahn umlaufenden Führungsgittern (6), welche sich in einem Abstand voneinander befinden, und an einer Fahrschiene (2), welche an einer Tragkonstruktion (1) befestigt ist, laufen und mit einer Antriebsvorrichtung, wobei ein Schubstangengliederband (3) vorhanden ist, welches aus einzelnen, miteinander mittels Gelenkkupplungen gekoppelten Schubstangen besteht und mittels Fahrgestellen (4) an der Fahrschiene (2) fahrbar ist, **dadurch gekennzeichnet, dass** die Führungsgitter (6) direkt an den Fahrgestellen (4) hängend befestigt sind und dass die Fahrschiene (2) aus einem einzigen Metallprofil besteht und dass an der Tragkonstruktion (1) eine Stabilisatorvorrichtung vorhanden ist, welche mit Führungsrollen (313) beidseitig an den Schubstangen (43) anliegen.

2. Führungsanlage nach Anspruch 1, **dadurch gekennzeichnet, dass** das Fahrgestell (4) ein Drehgestell (41) aufweist, an welchem mindestens zwei Tragräder (42) angeordnet sind, wobei die Tragräder (42) auf der Tragschiene (2) laufen

3. Führungsanlage nach Anspruch 2, **dadurch gekennzeichnet, dass** die Tragräder (42) jeweils in einem Winkel zueinander stehen.

4. Führungsanlage nach Anspruch 2, **dadurch gekennzeichnet, dass** das Drehgestell 41 mit 4 voneinander beabstandeten Tragrädern (42) versehen ist, wobei jeweils je 2 zueinander im Winkel stehen.

5. Führunganlage nach Anspruch 2, **dadurch gekennzeichnet, dass** das Fahrgestell mit einer Abhebesicherung (51) versehen ist.

6. Führungsanlage nach Anspruch 5, **dadurch gekennzeichnet, dass** die Abhebesicherung eine Rolle umfasst, welche von unten an der Fahrschiene (2) zum Abrollen kommt.

7. Führungsanlage nach Anspruch 1, **dadurch gekennzeichnet, dass** je zwei benachbarte Schubstangen (43) des Schubstangengliederbandes mittels einem Gelenkbolzen (311) am Fahrgestell seitwärts gegeneinander schwenkbar befestigt sind.

8. Führungsanlage nach Anspruch 5, **dadurch gekennzeichnet**, **dadurch gekennzeichnet, dass** sich das Schubstangengliederband (3) oberhalb oder unterhalb der Fahrschiene (2) befindet.
